# EUROPÄISCHE PATENTANMELDUNG

(11) **EP 1 944 567 A1**
(43) Veröffentlichungstag der Anmeldung: **16.07.2008**
(21) Anmeldenummer: 08000197.7
(22) Anmeldetag: 08.01.2008
(51) Int. Cl.: G01B 3/16, B43L 9/02

(54) **Zirkel mit einer insbesondere punktförmigen Lichtquelle an zumindest einem Zirkelarm**

(30) Priorität: 12.01.2007 DE 202007000461 U
(71) Anmelder: Cesieco Feinmechanik & Optik GmbH, 91489 Wilhelmsdorf (DE)
(72) Erfinder: Siebenhaar, Bernd H.C.F., 91489 Wilhelmsdorf (DE)
(74) Vertreter: Mielke, Klaus

(57) **Zusammenfassung**

Ein Zirkel der vorliegenden Art weist einen Kopf (1) und daran gelagerte Arme (31,32) auf, deren Enden (35,36) Haltemittel (313,314) insbesondere für Spitzen (315,316) und/oder Minen aufweisen. Gemäß der Erfindung ist zumindest an einem Arm (31,32) eine Lichtquelle (41,42) angebracht. Vorteilhaft ist die Lichtquelle (41,42) punktförmig, und z.B. als eine Leuchtdiode ausgeführt. Ein Zirkel mit dieser Ausführung weist den besonderen Vorteil auf, dass selbst bei Einsatz einer sehr kleinen und nicht lichtstarken, z.B. punktförmigen Lichtquelle eine gezielte Beleuchtung besonders von denjenigen Stellen vorgenommen werden kann, welche beim Gebrauch eines Zirkels gut sichtbar sein sollten. Dies sind insbesondere die Bereiche um die Zirkelspitzen und die darum liegenden Teile einer Arbeitsfläche, auf welche die Zirkelspitzen von einem Benutzer angewendet werden, insbesondere die Ausschnitte auf einer Karte oder einem Plan.

## Beschreibung

Der erfindungsgemäße Zirkel weist einen Kopf und daran gelagerte Arme auf. Die Enden der Arme weisen Haltemittel insbesondere für Spitzen und/oder Minen auf.

Bei dem Gebrauch eines Zirkels ist es in aller Regel erforderlich, dass die Arbeitsfläche, z.B. eine Karte, Zeichnung oder ein Plan, möglichst gleichmäßig und hell beleuchtet ist. Es gibt aber Ausnahmefälle, bei denen eine solche Beleuchtung nicht in dem notwendigen Maße möglich ist. Diese liegen dann vor, wenn der Benutzer eines Zirkels möglichst synchron auch die Beobachtung von möglicherweise weit entfernten Objekten vornehmen muss. In einem solchen Fall kann durch eine starke Beleuchtung des Arbeitplatzes eine solche Blendwirkung ausgehen, dass eine Beobachtung von weit entfernten Objekten behindert wird.

So kann z.B. an Deck einer in der Dämmerung auf dem Meer kreuzenden Jacht die Notwendigkeit auftreten, dass sowohl eine sorgfältige Beobachtung des in Fahrtrichtung liegenden Seeweges als auch gleichzeitig die Vorname von nautischen Navigationen z.B. mit Hilfe von Zirkeln auf Karten notwendig ist. Eine ähnliche Situation kann z.B. bei der Einfahrt einer Jacht bei Nacht in den Segelschiffhafen eines beleuchteten Ortes auftreten. Dabei ist einerseits insbesondere zur Vermeidung von Kollisionen mit anderen Wasserfahrzeugen eine äußerst aufmerksame Beobachtung der Hafeneinfahrt notwendig. Andererseits kann es aber gleichzeitig auch notwendig sein, den Kurs anhand von Kartenmaterial und Zirkeln zu bestimmen, um z.B. auf einer vorgeschriebenen Einfahrtsroute in den Hafen zubleiben und Untiefen zu umfahren. In diesen Fällen kann für einen Schiffsführer eine großflächige Beleuchtung z.B. eines Kartentisches äußerst hinderlich sein, da seine Augen ständig zwischen dem hellen Nahfeld des Kartentisches und dem nächtlichen Fernfeld einer Hafeneinfahrt adaptieren müssen. Hierdurch tritt eine erhebliche Blendung und Ermüdung der Augen ein.

Der Erfindung liegt die Aufgabe zu Grunde, einen Zirkel anzugeben, der so aufgebaut ist, dass die obigen geschilderten Probleme möglichst vermieden werden.

Die Aufgabe der Erfindung wird mit den Merkmalen des im Anspruch 1 angegebenen Zirkels gelöst. Weitere vorteilhafte Ausführungen der Erfindung sind in den Unteransprüchen angegeben.

Erfindungsgemäß ist zumindest an einem Arm des Zirkels eine Lichtquelle angebracht.

Ein Zirkel mit dieser Ausführung weist den besonderen Vorteil auf, dass selbst bei Einsatz einer sehr kleinen und damit von Hause aus nicht sehr lichtstarken, möglichst punktförmigen Lichtquelle eine gezielte Beleuchtung besonders von denjenigen Stellen vorgenommen werden kann, welche beim Gebrauch eines Zirkels gut sichtbar sein sollten. Dies sind insbesondere die Bereiche um die Zirkelspitzen und die darum liegenden Teile einer Arbeitsfläche, auf welche die Zirkelspitzen von einem Benutzer angewendet werden, insbesondere die Ausschnitte auf einer Karte oder einem Plan.

Vorteilhafte weitere Ausführungen der Erfindung sind in den Unteransprüchen angegeben.

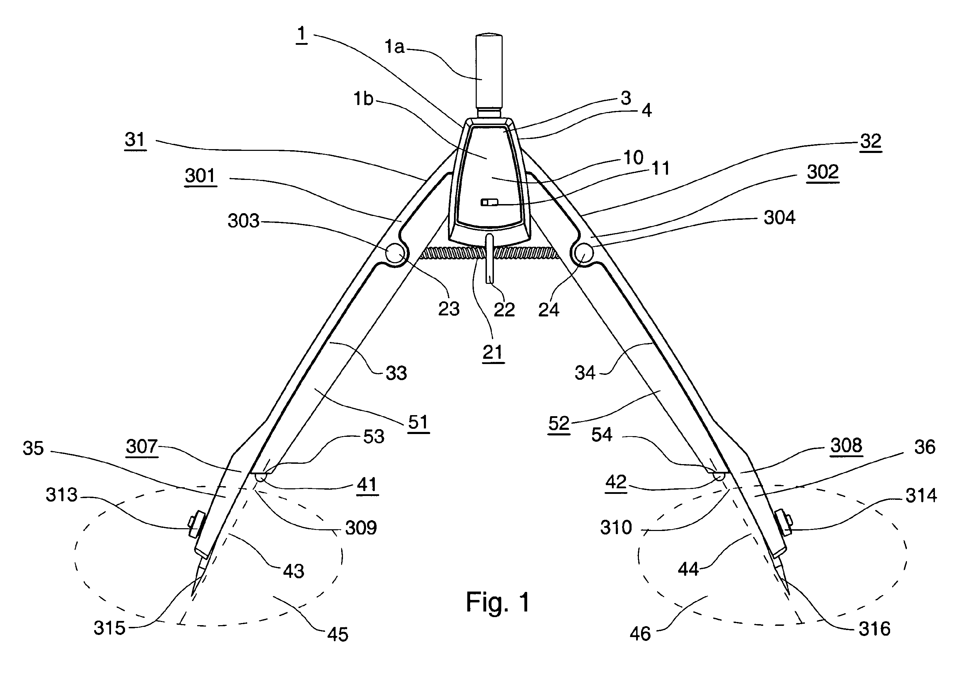

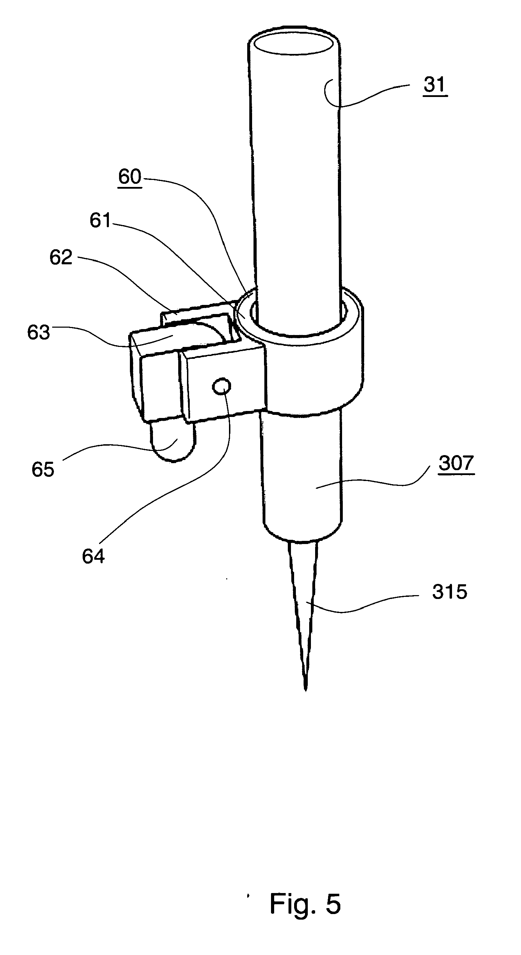

Da in vielen Fällen ein Zirkel quasi symmetrisch aufgebaut ist, können die Erfindung und alle weiteren, nachfolgend angegebenen vorteilhaften Ausführungen der Erfindung selbstverständlich uneingeschränkt auf nur einen Arm oder in symmetrischer Weise auch auf beide Arme eines Zirkels angewendet werden. So wird nachfolgend in den Figuren 1 bis 4 eine besonders vorteilhafte Ausführung der Erfindung am Beispiel eines Zirkels erläutert, welche zwei identisch aufgebaute Zirkelarme aufweist. Beide Arme sind also mit einer Lichtquelle ausgestattet. Figur 5 zeigt eine weitere Ausführung der Erfindung, bei der z.B. nur ein Arm eines Zirkels mit einer um dessen Achse drehbaren Lichtquelle versehen ist.

Vorteilhaft ist die mindestens eine Lichtquelle insbesondere punktförmig und z.B. in Form einer Leuchtdiode, d.h. LED, ausgeführt. Vorteilhaft ist die Lichtquelle schwenkbar an dem Arm angebracht, so dass deren Beleuchtungsbereich abhängig vom jeweiligen praktischen Einsatzfall in einer beliebigen Richtung ausgerichtet werden kann, insbesondere in Richtung auf das Ende des Zirkelarmes und eine dort befindliche Zirkelspitze oder Zeichenmine. Gemäß weiteren vorteilhaften Ausführungen kann die Lichtquelle z.B. um die Achse des Armes drehbar oder z.B. auf der Innenseite des Armes angebracht sein.

Vorteilhaft ist eine Spannungsversorgungsquelle für die Lichtquelle im Zirkelkopf untergebracht und mit bis dahin an einem Arm geführten elektrischen Anschlussmitteln verbunden. Dabei kann die Spannungsversorgungsquelle z.B. in einer Aufnahmemulde im Griff des Kopfes gelagert und z.B. als eine kleine, zylindrische Batterie als eine Knopfzelle ausgeführt sein. Zur Zu- oder Abschaltung der Spannungsversorgungsquelle und damit der Lichtquelle kann der Griff als ein Dreh- oder Druckschalter ausgeführt sein. Bei einer anderen Ausführung der Erfindung ist die Spannungsversorgungsquelle in einer Aufnahmemulde im Bügel des Zirkelkopfes untergebracht. Vorteilhaft weist der Bügel zwei Deckschalen auf, welche die Zirkelarme umgreifen. In einem solchen Fall ist die Aufnahmemulde in einer Deckschale platziert, welche auch als Träger für eine Schalter der Spannungsversorgungsquelle dienen kann.

Die Erfindung und weitere vorteilhafte Ausführungsformen derselben werden an Hand der kurz angeführten Figuren nachfolgend näher erläutert. Dabei zeigen
- Fig. 1: eine Draufsicht auf eine besonders vorteilhafte Ausführung eines gemäß der Erfindung gestalteten Zirkels, wobei beide Zirkelarme identisch ausgeführt und in der gleichen Weise mit bevorzugt punktförmigen Lichtquellen ausgestattet sind,
- Fig. 2: einen Ausschnitt auf den Bereich der Spitzen des Zirkels gemäß der Ausführung von Fig. 1 mit einer Teilschnittdarstellung durch eine im Übergangsbereich zwischen einem Schenkel und einem Fußstück eines Zirkelarms platzierte Lichtquelle,
- Fig. 3: einen Querschnitt durch die Schenkel des Zirkels gemäß der Ausführung von Fig. 1 bei geschossenen Zirkelarmen,
- Fig. 4: eine perspektivische Draufsicht auf den Kopf des Zirkels gemäß der Ausführung von Fig. 1 mit Blick in ein geöffnetes Batteriefach in einer Deckschale des Zirkelkopfes, und
- Fig. 5: eine perspektivische Draufsicht auf den Arm eines Zirkels gemäß einer weiteren Ausführung der Erfindung, bei welcher eine Lichtquelle um die Achse eines Zirkelarmes drehbar angebracht ist.

An Hand der Figuren 1 bis 4 wird nachfolgend eine erste beispielhafte und besonders vorteilhafte Ausführungsform für einen gemäß der Erfindung gestalteten Zirkel näher erläutert werden. Bei diesem sind z.B. beide Zirkelarme identisch aufgebaut und mit jeweils einer Lichtquelle ausgestattet.

Fig. 1 zeigt die Ausführung des Zirkels in einer Draufsicht. Dessen Zirkelarme 31,32 sind geöffnet dargestellt und werden in einem Zirkelkopf 1 zusammengeführt. Der Zirkelkopf 1 weist einen im Querschnitt annähernd u-förmigen Bügel 1a mit einer vorderen und hinteren Deckschale 3,4 und einen daran befestigten Griff 1b auf. Die Deckschalen 3,4 des Bügels 1b umfassen in einer üblichen Weise die oberen Enden der Zirkelarme 31,32. Weiterhin sind diese Enden über Schrauben mit den Deckschalen 3,4 verbunden, welche in Fig. 1 aus Gründen der besseren Übersicht nicht dargestellt sind.

Bei der in Fig. 1 dargestellten vorteilhaften Ausführung weisen die Zirkelarme 31,32 Schenkel 301,302 auf, welche geringfügig konkav gebogen und an den unteren Enden mit Fußstücken 307,308 abgeschlossen sind. Die Fußstücke können einteilig mit den Schenkeln verbunden oder auch abnehmbar ausgeführt sein. In der Ausführung von Fig. 1 sind diese Fußstücke 307,308 gegenüber den Schenkeln 301,302 geringfügig nach außen versetzt und mit Längsaufnahmemitteln 313,314 zur Halterung z.B. von Zirkelspitzen 315,316, Minen und dergleichen versehen. Im Beispiel der Fig. 1 weisen die Längsaufnahmemittel 313,314 in bekannter Weise auf den Innenseiten 33,34 der Zirkelarme liegende Längsnuten zur Führung der Zirkelspitzen 315,316 und Spannmittel mit einer außen liegenden Spannschraube auf. Die Schenkel 301,302 und Fußstücke 307,308 der Zirkelarme 31,32 sind vorteilhaft aus einem Metall gefertigt, und werden in einer üblichen Weise über eine drehbar in Führungsmuttern 23,24 gelagerte Spindel 21 mit einem Mittelrad 22 parallel geführt. Die Führungsmuttern 23,24 sind in entsprechenden Drehlagern 303,304 in den Schenkeln 310,302 der Zirkelarme 31,32 gelagert.

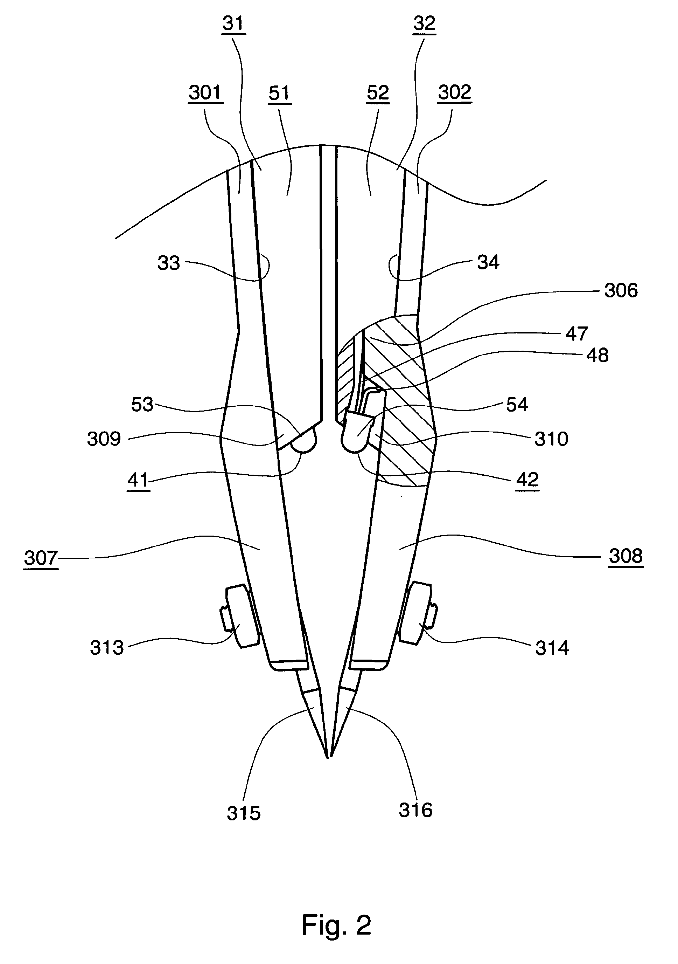

Erfindungsgemäß ist der in Fig. 1 dargestellte Zirkel mit punktförmigen Lichtquellen 41,42 ausgestattet. Diese sind vorteilhaft in Form von Leuchtdioden, auch LED genannt, ausgeführt und bevorzugt in den Übergangsbereichen 309,310 zwischen den Schenkeln 310,302 und den Fußstücken 307,308 der Zirkelarme 31,32 platziert. Diese Übergangsbereiche 309,310 stellen kleine Arbeitsräume dar, in denen die punktförmigen Lichtquellen 41,42 so optimal platziert werden können, dass deren Fokuslinien 43,44 auf die Enden 35,36 der Zirkelarme und die dort angebrachten Zirkelspitzen 315,316 gerichtet sind. Es entstehend dadurch Beleuchtungsbereiche 45,46, welche in Fig. 1 durch strichlierte Ovale um die Enden 35,36 symbolisiert sind. Die Gestaltung der Arbeitsräume in den Übergangsbereichen 309,310 wird nachfolgend an Hand der Fig. 2 noch näher erläutert werden. Hiermit kann eine symmetrische und gleichmäßige Ausleuchtung beider Zirkelspitzen und der in der Praxis jeweils auf einer Unterlage darum befindlichen Arbeitbereiche erreicht werden.

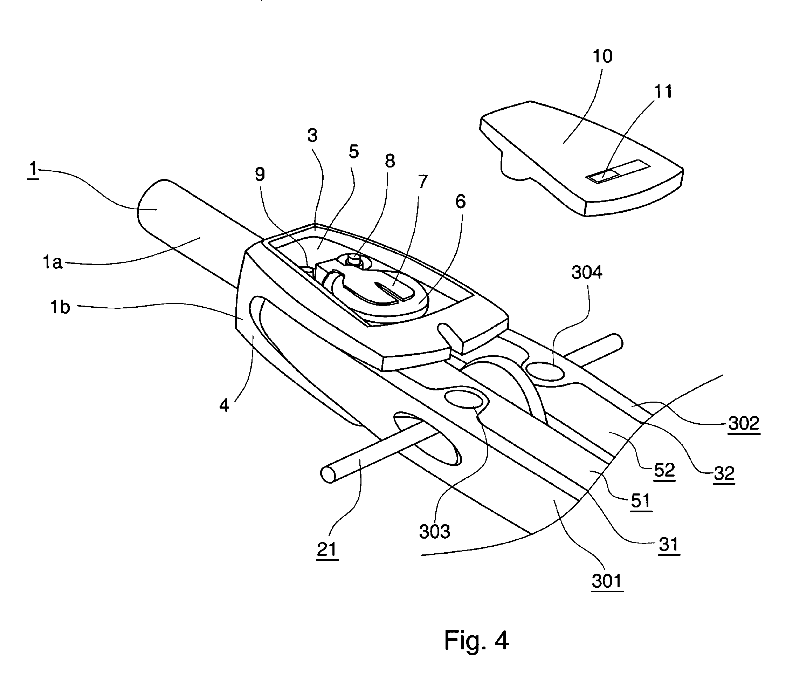

Gemäß einer vorteilhaften, im Beispiel der Fig. 1 bereits dargestellten weiteren Ausführung der Erfindung sind zusätzliche Einlegeschalen 51,52 vorhanden, welche in diesem Fall auf die Innenseiten 33,34 der Zirkelarme 31,32 insbesondere im Bereich der Schenkel 301,302 aufgelegt sind. Die Einlegeschalen 51,52 weisen an den unteren Enden Einlegeöffnungen 53,54 zur Halterung der punktförmigen Lichtquellen 41,42 auf. Es ist vorteilhaft, wenn im Inneren der Einlegeschalen elektrische Anschlußmittel zur Spannungsversorgung der punktförmigen Lichtquellen, insbesondere Anschlusskabel, verlaufen und bis in Zirkelkopf 1 geführt sind. Dort ist vorteilhaft eine elektrische Spannungsversorgungsquelle der punktförmigen Lichtquellen 41,42 untergebracht, insbesondere eine Flachbatterie. Eine vorteilhafte Ausführung für ein derartiges Batteriefach wird am Beispiel der Perspektivdarstellung in Fig. 4 noch näher erläutert werden.

Bei einer anderen, nicht dargestellten Ausführung der Erfindung können derartige, insbesondere die Lichtquellen und deren elektrische Anschlussmittel tragende Einlegeschalen auch auf den Außenseiten der Schenkel der Zirkelarme aufgelegt sein.

Einlegeschalen der oben genannten Art weisen den besonderen Vorteil auf, dass diese als eine optimale Halterung für insbesondere punktförmige Lichtquellen, aber gegebenenfalls auch als eine Halterung zur Unterbringung von elektrischen Anschlussmitteln zur Spannungsversorgung der Lichtquellen, insbesondere von Anschlusskabeln, dienen können. Mit dem Einsatz von z.B. aus einem Kunststoff gefertigten Einlegeschalen kann weiterhin die Montage erheblich vereinfacht werden. So können wesentliche, zur Beleuchtung des Zirkels benötigte Elemente, nämlich insbesondere die Lichtquellen und deren elektrische Anschlussmittel in den Einlegeschalen vormontiert werden. Jeweils eine dieser Baueinheiten kann dann auf die gegenüber liegenden Innenseiten oder auf die Außenseiten der Zirkelarme eines Zirkels aufgelegt werden. Weiterhin ist es möglich, die zur Halterung einer Lichtquelle am Ende einer Einlageschale vorhandene Einlageöffnung so zu gestalten, dass die gewünschte Fokussierung der Lichtquelle auf eine Zirkelspitze ohne separate Justiermaßnahmen erreicht werden kann.

Werden als insbesondere punktförmige Lichtquellen vorteilhaft Leuchtdioden eingesetzt, so können die Einlegeschalen und deren Einlegeöffnungen so geformt sein, dass bei einer Vormontage lediglich die Leuchtdiode in die Einlegeöffnung eingelegt werden muss. Diese nimmt dann eine solche Position ein, dass deren Fokus nach Auflage der Einlegeschale auf die Innenseite eines Zirkelarms in gewünschter Weise auf den Bereich einer jeweiligen Zirkelspitze gerichtet ist.

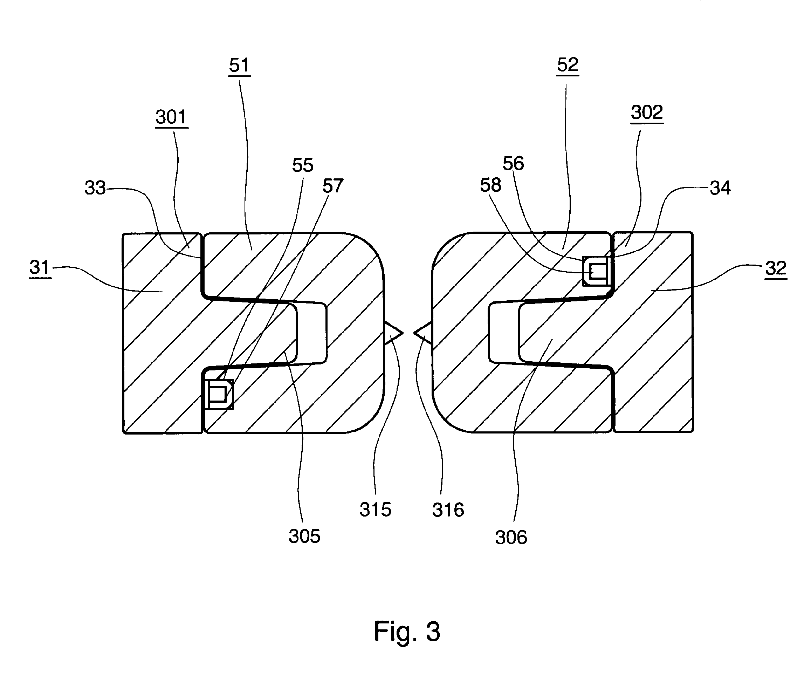

Fig. 3 zeigt beispielhaft einen Schnitt durch eine vorteilhafte Ausführung der Zirkelarme 31,32. Dabei weisen die Schenkel 301,301 der Zirkelarme auf deren Innenseiten 33,34 vorteilhaft messerartige Längsrippen 305,306 auf. Die Schenkel haben somit einen bevorzugt t-förmigen Querschnitt. Auf diese Längsrippen 305,306 sind die Einlegeschalen 51,52 aufgesetzt, welche dementsprechend vorteilhaft einen u-förmigen Querschnitt aufweisen. Zur Führung von elektrischen Anschlussmitteln zur Spannungsversorgung der punktförmigen Lichtquellen sind in jeweils einem Schenkel der u-förmigen Einlegeschalen 51,52 Längsnuten 55,56 vorhanden. In diese sind vorteilhaft Stromschienen 57,58 oder Flachleiterbahnen eingelegt, welche z.B. positives Spannungspotential von der Batterie bis zu einem Pol der punktförmigen Lichtquellen leiten. Wenn die Schenkel 301,302 der Zirkelarme 31,32 aus einem leitenden Material gefertigt sind, kann vorteilhaft der jeweils andere Pol der Lichtquellen direkt mit den Schenkeln 301,302 verbunden sein, welche dann in der Art eines Massepotentials als Rückleiter dienen. Dies ist in Fig. 2 im Detail zu erkennen.

So zeigt Fig. 2 einen Ausschnitt auf den Bereich der Spitzen 315,316 des Zirkels gemäß der Ausführung von Fig. 1 mit einer Teilschnittdarstellung durch die im Übergangsbereich 310 zwischen dem Schenkel 302 und dem Fußstück 308 des Zirkelarms 32 platzierten punktförmigen Lichtquelle 42. Der Übergangsbereich 310 stellt einen Arbeitsraum zur Platzierung der Lichtquelle 42 dar. Er wird nach oben durch die unteren Enden des Schenkels 302 und dessen messerartiger Längsrippe 306, und nach rechts durch die Innenseite des nach außen versetzten Fußstücks 308 begrenzt. Die punktförmige Lichtquelle 42 ist in der Einlegeöffnung 54 am unteren Ende der im Querschnitt u-förmigen Einlegeschale 52 derart platziert, dass deren Lichtfokus vorteilhaft annähernd auf die Zirkelspitze 316 gerichtet ist. Weiterhin ist einerseits deren elektrischer Anschlußkontakt 47 in der Art eines Massekontakts mit der Oberfläche des als Rückleiter dienenden Schenkels 302, und andererseits deren elektrischer Anschlußkontakt 48 mit der in der Einlegeschale 52 geführten Stromschiene 58 - wie in Fig. 3 dargestellte - verbunden.

Der in Fig. 2 gezeigte Ausschnitt auf die Spitzen 315,316 des Zirkels zeigt, dass die Übergangsbereiche 309,310 zwischen den bevorzugt geringfügig konkav gekrümmten Schenkeln 301,302 und den Fußstücken 307,308 besonders geeignet sind, um die punktförmigen Lichtquellen 41,42 besonders günstig auf den Innenseiten 33,34 der Zirkelarme 31,32 zu platzieren.

Bei der in den Figuren 1 und 2 dargestellten, vorteilhaften Ausführung eines gemäß der Erfindung gestalteten Zirkels ist also zumindest ein Zirkelarm geringfügig konkav gekrümmt und die zumindest eine Lichtquelle so justiert auf dessen Innenseite angebracht, dass diese auf die zugeordnete Zirkelspitze fokussiert ist. Auch hier kann es von Vorteil sein, wenn beide Zirkelarme symmetrisch in der gleichen Weise geringfügig konkav gekrümmt sind und jeweils eine Lichtquelle möglichst gegenüber liegend auf den Innenseiten der Zirkelarme angebracht ist.

Diese Ausführung weist den besonderen Vorteil auf, dass der Zirkel keine vor- oder abstehenden äußeren Auf- und Anbauten aufweist. Vielmehr schmiegen sich die punktförmigen Lichtquellen auf den Innenseiten der geringfügig konkav gekrümmten Zirkelarme so an, dass sich ein gemäß der Erfindung ausgestalteter Zirkel bezüglich seiner Abmessungen und Gestaltung kaum von herkömmlichen Zirkeln unterscheidet.

In Fig. 4 ist weiterhin eine perspektivische Draufsicht auf das Kopfstück 1 des Zirkels gemäß der Ausführung von Fig. 1 dargestellt. Dieses ist vorteilhaft aus einem elektrisch isolierenden Material gefertigt, insbesondere einem Kunststoff. Der Kopf 1 weist weiterhin eine Bügel 1b mit einem u-förmigen Querschnitt und einer vorderen und hinteren Deckschale 3,4 auf. Diese umfassen und fixieren die oberen Enden der Zirkelschenkel 301,302 z.B. unter Zuhilfenahme von Schrauben.

Bei der in Fig. 4 dargestellten, besonders vorteilhaften Ausführung der Erfindung weist die vordere Deckschale 3 eine Aufnahmemulde 5 auf, welche mittels einer Abdeckung 10 verschlossen werden kann und in Fig. 4 im geöffneten Zustand dargestellt ist. Die Aufnahmemulde 5 hat insbesondere die Funktion eines Batteriefachs. So sind einerseits die im Inneren der Einlegeschalen 51,52 verlaufenden elektrischen Anschlußmittel zur Spannungsversorgung der Lichtquellen 41,42 - d.h. gemäß der Darstellung von Fig. 3 die Stromschienen 57,58 - bis in die Aufnahmemulde 5 geleitet, dort zusammengeführt und in Form des Kontakts 9 zugänglich. Weiterhin ist das elektrisch leitende und somit als eine Art Rückleiter dienende Material der beiden Zirkelarme 51,52 in Form des Kontakts 8 zugänglich. An diese beiden Kontakte 8,9 sind die Pole einer Flachbatterie 6 bevorzugt über zumindest ein entsprechend geformtes Kontaktblech 7 angeschlossen.

Zur Zu- und Abschaltung der beiden punktförmigen Lichtquellen 41,42 ist der erfindungsgemäße Zirkel vorteilhaft mit Schaltmitteln ausgestattet. Diese sind im Beispiel der Figuren 1 und 4 in Form eines Schiebeschalters 11 ausgeführt und in die Abdeckung 10 integriert. Bei einer anderen, nicht dargestellten Ausführung kann z.B. der Handgriff 2 als ein Dreh- oder Druckschalter ausgeführt sein und somit als Schaltmittel für die Lichtquellen 41,42 dienen.

In Fig. 5 ist ausschnittsweise der Arm 31 eines weiteren, gemäß der Erfindung gestalteten Zirkels gezeigt. Dabei ist der Arm 31 mit einer Lichtquelle 65 ausgestattet, welche vorteilhaft sowohl schwenkbar als auch um die Achse des Armes 31 drehbar ist. Hierzu ist der Arm 31 z.B. einer separaten Halterung 60 ausgestattet.

Diese weist einen drehbaren Haltering 61 auf, welche den Arm 31 des Zirkels radial umfasst. Der Haltering 61 weist wiederum eine Halteklemme 62 mit zwei gegenüber liegenden Klemmblöcken auf, zwischen denen die Lichtquelle 65 über einen Sockelblock 63 und eine quer verlaufende Drehwelle 64 schwenkbar gelagert ist. Mit dieser Ausführung kann die Lichtquelle 65 uneingeschränkt auf eine beliebige Stelle in einem die Zirkelspitze 315 umgebenden Arbeitsbereich ausgerichtet werden.

## Patentansprüche

1. Zirkel mit einem Kopf (1) und daran gelagerten Armen (31,32), deren Enden (35,36) Haltemittel (313,314) insbesondere für Spitzen (315,316) und/oder Minen aufweisen, **dadurch gekennzeichnet, dass** zumindest an einem Arm (31,32) und/oder am Kopf eine Lichtquelle (41,42) angebracht ist.

2. Zirkel nach Anspruch 1, wobei die Lichtquelle (41,42) punktförmig ist.

3. Zirkel nach Anspruch 1 oder 2 mit einer Leuchtdiode als Lichtquelle (41,42).

4. Zirkel nach einem der vorangegangenen Ansprüche, wobei die Lichtquelle (41,42) an dem Arm (31,32) schwenkbar angebracht ist.

5. Zirkel nach Anspruch 4, wobei der Beleuchtungsbereich (45,46) der Lichtquelle (41,42) annähernd auf das Ende (35,36) des Armes (31,32) ausrichtbar ist.

6. Zirkel nach einem der vorangegangenen Ansprüche, wobei der Arm (31,32) elektrische Anschlussmittel (57,58) zur Spannungsversorgung der Lichtquelle (41,42) aufweist.

7. Zirkel nach Anspruch 6, wobei die elektrischen Anschlussmittel (57,58) als Stromschiene bzw. Flachleiterbahn ausgeführt sind.

8. Zirkel nach Anspruch 6 oder 7, wobei im Kopf (1) eine Spannungsversorgungsquelle (6) platziert und mit den elektrischen Anschlussmitteln (57,58) verbunden ist.

9. Zirkel nach Anspruch 8, wobei der Kopf (1) einen Bügel (1b) mit einer Aufnahmemulde (5) für die Spannungsversorgungsquelle (6) aufweist.

10. Zirkel nach Anspruch 9, wobei der Bügel (1b) zwei Deckschalen (3,4) aufweist, welche die Arme (31,32) umgreifen, und die Aufnahmemulde (5) in einer Deckschale (3) platziert ist.

11. Zirkel nach Anspruch 10, wobei in einer Deckschale (3) des Bügels (1b) ein Schalter (11) für die Spannungsversorgungsquelle (6) angeordnet ist.

12. Zirkel nach Anspruch 8, wobei der Kopf (1) einen Griff (1a) mit einer Aufnahmemulde für die Spannungsversorgungsquelle aufweist.

13. Zirkel nach Anspruch 12, wobei der Griff (1a) einen Schalter für die Spannungsversorgungsquelle aufweist, welcher durch Drehen oder Drücken des Griffs (1a) betätigbar ist.

14. Zirkel nach einem der vorangegangenen Ansprüche, wobei die Lichtquelle (41,42) um die Achse des Armes (31,32) drehbar angebracht ist.

15. Zirkel nach einem der Ansprüche 1 bis 13, wobei die Lichtquelle (41,42) auf der Innenseite (33,34) des Armes (31,32) angebracht ist.

16. Zirkel nach Anspruch 15, wobei der Arm (31,32) konkav gekrümmt und die Lichtquelle (41,42) so auf der Innenseite (33,34) des Armes (31,32) angebracht ist, dass deren Fokuslinie (43,44) annähernd auf das Ende (35,36) des Armes (31,32) fokussiert ist.

17. Zirkel nach einem der vorangegangenen Ansprüche, wobei der Arm (31,32) einen Schenkel (301,302) und eine Einlegeschale (51,52) aufweist, welche auf dem Schenkel (301,302) aufgelegt ist und eine Einlageöffnung (53,54) zur Halterung der Lichtquelle (41,42) aufweist.

18. Zirkel nach Anspruch 17, wobei die Einlegeschale (51,52) einen u-förmige Querschnitt und der Schenkel (301,302) insbesondere auf der Innenseite (33,34) eine Längsrippe (305,316) zum Aufsetzen der Einlegeschale (51.52) aufweist.

19. Zirkel nach Anspruch 17 oder 18, wobei die Einlegeschale (51,52) eine Längsnut (55,56) zur Halterung von elektrischen Anschlussmitteln (57,58) aufweist.
